# EUROPEAN PATENT SPECIFICATION

(11) **EP 0 673 413 B1**
(45) Date of publication and mention of the grant of the patent: **13.10.1999**
(21) Application number: 93906633.8
(22) Date of filing: 16.03.1993
(51) Int. Cl.: C12C 5/00, C12C 1/18, C12C 7/04

(54) **PROCEDURE FOR PREPARING BREWERY RAW MATERIAL, BREWERY RAW MATERIAL PREPARED BY THE PROCEDURE, AND USE OF THE BREWERY RAW MATERIAL**
VERFAHREN ZUR HERSTELLUNG VON ROHMATERIAL ZUM BRAUEN, ENTSPRECHENDES ROHMATERIAL UND VERWENDUNG
PROCEDURE DE PREPARATION D'UNE MATIERE PREMIERE DE BRASSAGE, MATIERE PREMIERE DE BRASSAGE OBTENUE SELON CETTE PROCEDURE ET SON UTILISATION

(30) Priority: 16.03.1992 FI 921124
(43) Date of publication of application: 27.09.1995
(73) Proprietor: OY ALKO AB, 00180 Helsinki (FI)
(72) Inventor: LÄHDESMÄKI, Matti, SF-61331 Koskenkorva (FI); KUIKKA, Kaarlo, SF-61331 Koskenkorva (FI)
(74) Representative: Partio, Erja
(86) International application number: FI9300096
(87) International publication number: WO9319160

(56) References cited:
- FI-B- 81 606
- Lebensmittelindustrie, Volume 27, No. 3, 1980, Ing. R. TSCHIERSCH, "Einige Aspekte und Probleme der Zerkleinerung von Gerstenrohfrucht".
- Dialog Information Services, File 350, Derwent WPI, Dialog Accession No. 001617802, WPI Accession No. 76-52223x/28, BORKMANN K.: "Mash for Fermentation and Spirit Distillation - Enables Large Vessels to be Erected in the Open at Reduced Costs"; & DD,A,119817, 760512, 7628 (Basic).
- Dialog Information Services, File 51: FSTA 1969-93, Dialog Accession No. 00321877, 86-08-h0084 SUBFILE: FSTA, HUDSON, J.F.: "Adjuncts and their Use in Brewing", Brewers' Guardian 1985, 114 (7) 18-21.

## Description

The present invention concerns a procedure for preparing brewery raw material, a brewery raw material prepared by said procedure, and the use of said brewery raw material in beer-making.

Beer is mainly made of barley malt. The price of malt is comparatively high, however, and therefore endeavours are in beer-making to adopt less expensive raw materials, e.g. the use of starch and of raw materials rich in starch, on the side of malt.

Beers with lighter flavour have enjoyed increasing popularity in recent years. In the making of lighter beers raw materials rich in starch are used on the side of malt. Regarding the technology known in the art, the following references are cited: Lebensmittelindustrie, Vol. 27, 1980, p. 124-126, Tschiersch, R., Einige Aspekte und Probleme der Zerkleinerung von Gerstenrohfrucht, and Brewer's Guardian, July 1985, p. 18-21, Hudson, J.F., Adjuncts and their use in brewing.

Brewery raw material rich in starch has heretofore been prepared e.g. of barley by a wet process in which the starch has been separated for use, on the side of malt, in beer-making. These separation processes of prior art are not fully satisfactory however, especially owing to their complexity and cost.

The object of the present invention is to disclose a novel procedure for preparing from barley a brewery raw material for use on the side of malt, said procedure being implementable in a simple and flexible way in conjunction with other barley processing. It is particularly an object of the invention, to disclose a procedure in which brewery raw material can be prepared at lower cost than before and in such manner that it becomes possible with the brewery raw material in question to replace a great part of the malt, up to half thereof.

Regarding the features characterizing the invention, reference is made to the Claims section.

The invention is based on the unexpected fact observed in studies that were made, that the fine fraction separated by sifting from barley after grinding, and which is rich in starch, is appropriate as it is to be used as brewery raw material, together with malt. It is possible to use this brewery raw material in any small proportion of the total malt quantity, advantageously more than 10% by weight up to 15, suitably 40, advantageously 45, most advantageously even up to 50% of the aggregate of malt and brewery raw material. This means, in practice, that up to half of the malt can be replaced with brewery raw material prepared as taught by the invention. This naturally implies lower manufacturing costs than before for the part of the brewery raw material, in other words, lower production cost. Moreover, the brewery raw material of the invention is particularly well suited for making light beer, i.e., no such amounts of fat, proteins, polyphenol and β-glucan are dissolved in the mash and worts from the brewery raw material of the invention as from conventional barley or barley malt. Thereby the beer that is being made will have a light and mild flavour, consistent with accustomed modern taste.

As taught by the invention, from ground barley a coarse fraction and a fine fraction are separated by sifting, the latter having particle size less than 300 µm, advantageously less than 250 µm, e.g. 150 to 300 µm, advantageously 150 to 250 µm. The fine fraction contains starch in abundance, and little fat, protein, polyphenol and β-glucan. The fine fraction is ready to be used for brewery raw material as it is, together with malt. The other malt constituents, i.e., the coarse fraction obtained on separation and which contains e.g. bran and grain hull parts, and other constituents potentially to be separated, can be used for raw materials in other processes. The manufacturing process is a dry process: grinding and separation are carried out in the dry state, at a moisture content such as is employed in conventional milling industry.

According to the invention, the proportion of the fine fraction to be produced, referred to the barley quantity that has to be ground, is 10 to 25% by weight, advantageously 10 to 20% by weight, of the total barley quantity. The fine fraction contains more than 65% by weight, suitably more than 75% by weight, advantageously even more than 80% by weight starch, while the normal starch content of barley is about 55 to 60% by weight. - In this description all percentages are given as per cent by weight, calculated on the dry matter.

The procedure of the invention enables brewery raw material to be prepared by means of a simple grinding process, followed by sifting out the desired fraction. The grinding process can, for instance, be implemented with a hammer mill, which is commonly employed in the mill industry. The sifting can be carried out using, for instance, a plan sifter, advantageously one having a cylindrical, rotating screen, in which case the centrifugal effect can also be utilized in the separating process. When the barley is ground in two steps, the screen size of the sieve in the first separating step is, for instance, on the order of about 250 to 300 µm, by which the coarsest particles will be separated. In the second sifting step the screen size is on the order of 150 to 250 µm, whereby the desired fraction with high starch content will be separated.

The invention is described in the following in detail, with the aid of embodiment examples, referring to the attached drawing, wherein:-
Fig. 1 presents the block diagram of a process according to the invention, in simplified form,
Fig. 2 presents the flow chart of another process according to the invention, and
Fig. 3 presents filtration curves when brewery raw material according to the invention is being applied.

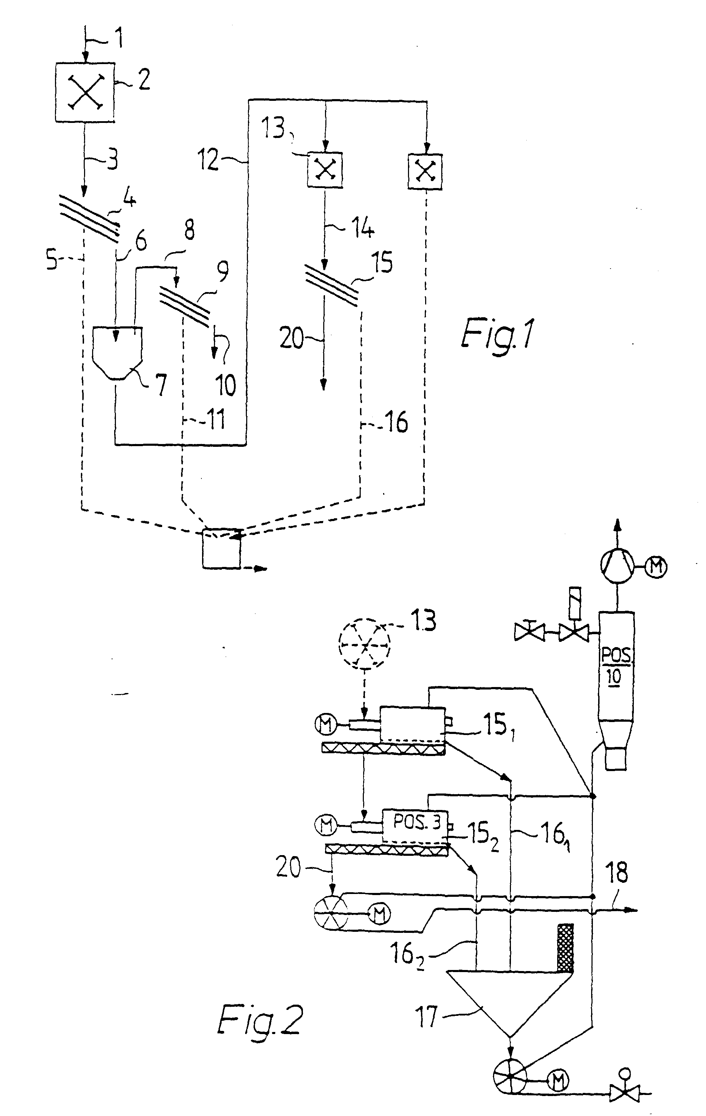

In Fig. 1, the barley 1 going to be fed into the process is ground in a hammer mill 2 to barley grits; the grits contain about 50% by weight starch. The grits 3 are conducted to a sifter 4; the passing fraction 5 about 15% of the barley is conducted to conventional continued barley flour refining. The coarser fraction 6 is conducted to a separator 7, where the coarser parts 8 are separated, about 4% of the barley to be conducted further to a sifter 9, where the bran 10 is separated; the coarser flour 11 is conducted to a conventional continued barley flour process. The finer barley flour 12 obtained from the separator 7, starch content about 65% by weight, is conducted to the second grinding step, i.e., to a hammer mill 13, the flour 14 thus obtained is sifted in a sifter 15; the coarse flour 16 thus obtained is conducted to the conventional barley flour process. The fine fraction thus obtained, containing about 75 to 80% by weight starch, is separated for use as brewery raw material together with malt. The proportion of fine fraction of the total barley quantity introduced, 1, is about 10 to 25% by weight. The particle size of the fine fraction is less than 250 µm.

The separating process is depicted in detail in Fig. 2. The barley flour obtained from the hammer mill 13, i.e., from the hammer mill of the second grinding step, is conducted to a Typhoon sifter 15₁, the coarse fraction 16₁ to an exit silo 17, the fine fraction to a second Typhoon sifter 15₂. From here, the coarse fraction 16₂ is carried to the exit silo 17 and the fine fraction to a silo 18, to be transported to the brewery; the fine fraction has particle size smaller than 250 µm.

The feed to the sifter 15₁ is 5 to 8 t/h, the feed from sifter 15₁ to the exit silo 17, 4 to 7 t/h, and the removal from sifter 15₂ in the form of fine fraction to the storage silo 18, 1 t/h.

Table 1 gives the composition of the brewery raw material prepared by the process of Fig. 1, compared with conventional barley flour and with barley starch. The brewery raw material was obtained by further fractionating, as taught by the invention, the flour fraction obtained in the dry grinding process and already classified. The yield of fraction enriched in starch was 10 to 15% by weight of the total flour flow quantity.

**Table 1.**

| Content, % of dry matter | Barley flour | Brewery raw material | Barley starch |
|---|---|---|---|
| Protein | 13.0 | 9.5 | 0.3 |
| Fat | 3.5 | 2.2 | 0.3 |
| β-glucan | 4.1 | 2.1 | 0.1 |
| Starch | 58 | 79 | 99 |
| "Fermentable" | 65 | 89 | 104 |
| "Extractible" | 69 | 93 | 107 |

The particle size of the concentrate was less than 0.16 mm. According to the results, solubility and extractibility of the flour fraction were good; the use of the brewery raw material on the side of malt in beer-making implies no separate raw cereal boiling. Furthermore, liquefaction and saccharifying can be implemented under identical conditions (temperature, pH) as with barley malt.

### EXAMPLE 1

### Experimental arrangements:

In the experiments, two different barley dry grinding fractions were studied, Fraction I and Fraction II. Fraction I represented the reference fraction, and Fraction II represented a finely divided barley meal fraction according to the invention.

The reference fraction I was prepared in a way differing from the procedure of the present invention, by mixing barley meal and barley starch (at 50/50 proportions; starch content was found to be 78.5% by weight). The procedure by which Fraction I was prepared is costly and complicated.

Preparation of Fraction II conforming to the invention was performed at production scale, by first grinding the barley in accordance with the process of Alko's production unit in Kosken korva in step I to granule size (less than 2 mm). After grinding followed dust removal from the barley by sifting and removal of outermost husk parts by applying air classification. The ground barley granules were conducted to the grinding in step II, the barley powder emerging therefrom being subjected to classification according to the invention. As taught by the invention, the powder was conducted to a typhoon sieve having mesh size 300 µm. The passing fraction from this typhoon sieve was conducted to a second typhoon sieve, mesh size 200 µm. The finely divided flour fraction passing the second typhoon sieve was the desired brewery raw material according to the invention (Fraction II), which was rich in starch (starch content 82.8% of dry matter).

In order to illustrate the size distribution of Fraction II, a sieving carried out on Fraction II is here presented (Table 2). Table 2 also shows, for purposes of comparison, the results of a similar sieving made with barley flour.

**Table 2.**

| Sieve mesh, µm | Barley flour, g | Fraction II, g |
|---|---|---|
| Over 250 | 71.21 | 0.19 |
| Over 180 | 6.98 | 0.64 |
| Over 140 | 3.74 | 6.97 |
| Over 90 | 1.68 | 8.62 |
| Over 75 | 1.58 | 11.06 |
| Bottom | 14.29 | 71.32 |
| Total | 99.48 | 98.8 |

Kustaa Pilsner malt (α-amylase activity 52 DU, and diastatic force 250 WK) was used for malt. 30% of the malt quantity were replaced with barley fraction.

Mashing mix:
70 g Kustaa malt, grit coarseness
30 g barley fraction
Grit/water proportion 1:1 (100 g : 300 ml)
pH control, 0.6 ml 1-n sulphuric acid
Calcium salts, 0.15 g CaCl₂ x 2H₂O

Mashing programme, Test series 1 (6 specimens), Fraction I:
Mashing-in 45°C, Pause 0, 15, 30, 45, 60 or 75 min.
Raising 1°C/min 65°C, saccharifying pause 1 h
Raising 1°C/min 80°C, pause 10 min.
Straining 80°C (through filter paper)
Washing 80°C, 2x 100 ml water.

Test series 2 (4 specimens), Fraction II:
Mashing-in 48°C, pause 0, 30, 45 or 60 min.
otherwise as in Test series 1.

Test series 3 (3 specimens), Fractions I & II:
Mashing-in 48°C, pause 30 min.
otherwise as in Test series 1
Grit/water proportion 1:2.86 (70 g grits: 200 ml) .

### Results:

In the first test series the effect of the length of the mashing-in period on cleaving of glucans was studied (Table 3).

**Table 3.**

| Results of analysis of worts in test series 1 (Fraction I). | | | | | | | |
|---|---|---|---|---|---|---|---|
| Pause 45°C | min | 0 | 15 | 30 | 45 | 60 | 75 |
| Extract content | % b.w. | 17.1 | 18.0 | 17.1 | 17.9 | 17.5 | 17.9 |
| Viscosity | cP | 2.82 | 2.70 | 2.57 | 2.48 | 2.42 | 2.44 |
| β-glucans | mg/l | 1218 | 817 | 596 | 474 | 410 | 369 |
| FAN | mg/l | 238 | 259 | 260 | 290 | 285 | 302 |
| NLKA | % | 83.2 | 84.9 | 84.4 | 86.0 | 85.8 | 86.0 |
| Filtration | ml/3h | 230 | 215 | 280 | 255 | 265 | 290 |
| Turbidity | FU | 10 | 9.3 | 10 | 9.3 | 9.3 | 8.8 |
| Extract yield | % air-dry | 42 | 42 | 52 | 49 | 50 | 56 |
| FAN = Free amino nitrogen | | | | | | | |
| NLKA = Apparent final degree of fermentation | | | | | | | |

The length of the mashing-in pause had a notable effect on the viscosity of the wort, on the cleaving of β-glucans and on the free amino nitrogen quantity. Increasing the length of the pause beyond 45 min. caused no further increase of the quantity of fermentable sugars, as measured in terms of final degree of fermentation. Determination of filtering rate by using filter paper is not very accurate. The filtering runs were terminated after 3 hrs. The extract yields have been calculated on the basis of volume at the end of filtration. Saccharification was measured by means of the iodine/starch test during the saccharifying pause at 65°C. No specimen had undergone complete saccharification. In the second test series, the mashing-in temperature was raised to 48°C and the effect of fraction II on the wort quality was studied. The results from the test series are displayed in Table 4. Fraction II was rather more finely divided than fraction I, and this had its own influence on extraction, hydrolysis of β-glucans and lowering of wort viscosity. Filtration and extract yield were clearly better in this test series than in the preceding series. All specimens were completely saccharified by the time the temperature reached 80°C.

**Table 4.**

| Results of analysis of worts in test series 2 (Fraction II). | | | | | |
|---|---|---|---|---|---|
| Pause 48°C | min | 0 | 30 | 45 | 60 |
| Extract content | % b.w. | 16.9 | 17.3 | 17.7 | 17.9 |
| Viscosity | cP | 2.43 | 2.33 | 2.30 | 2.30 |
| β-glucans | mg/l | 660 | 360 | 348 | 344 |
| FAN | mg/l | 222 | 258 | 283 | 303 |
| Filtering time | h | 1.8 | 1.8 | 1.8 | 1.8 |
| vol. | ml | 320 | 330 | 335 | 315 |
| Extract yield | % | 58 | 61 | 64 | 60 |

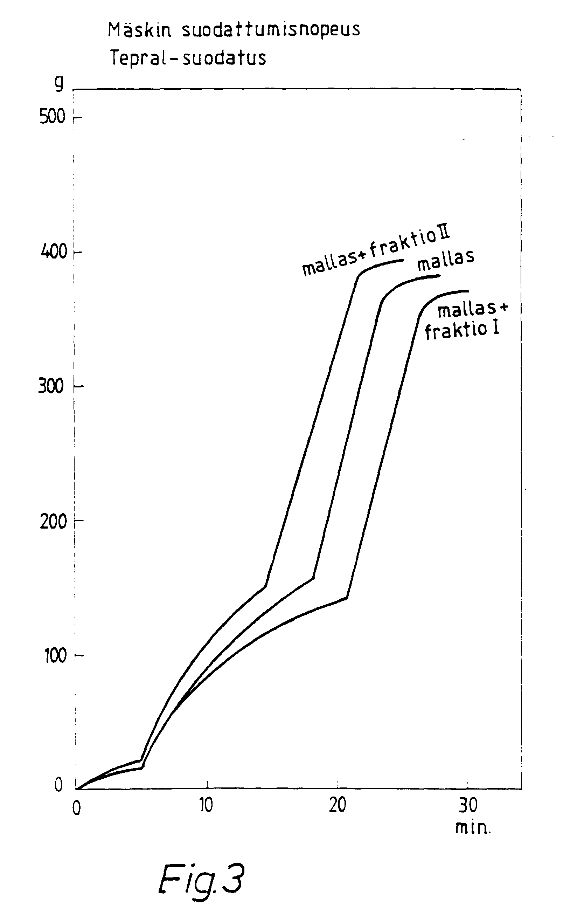

In the third test series the effect of fractions I and II on filtration was studied using a socalled Tepral (registered trademark) filtering apparatus. The filtration curves are reproduced in Fig. 3. The mix in which 30% of the malt had been replaced with fraction II filtered best and yielded the highest extraction result. Fraction I was comparatively coarse, and therefore extraction and hydrolysis of β-glucans could not proceed far enough during the 30-min. mashing-in pause. Moreover, its mash cake bound water, and the quantity of wort obtained was less than that obtained using fraction II.

**Table 5.**

| Results of analysis of worts in test series 3. | | | | |
|---|---|---|---|---|
| Malt | % | 100 | 70 | 70 |
| Barley | % | - | 30 (I) | 30 (II) |
| Extract content | % b.w. | 13.2 | 13.9 | 13.3 |
| Viscosity | cP | 1.85 | 2.02 | 1.82 |
| β-glucans | mg/l | 404 | 832 | 416 |
| FAN | mg/l | 261 | 195 | 192 |
| Filtration quantity | g | 381 | 370 | 393 |
| Extract yield | % air-dry | 71.3 | 73.5 | 74.7 |

### Summary:

It is possible by lengthening the mashing-in pause, to exert a remarkable influence on the hydrolysis of β-glucans and on the viscosity of the wort. The finely divided barley fraction (II) here examined was well appropriate to be used as raw material replacing malt. Mash filtration and extract yield were better than those in full malt mashing.

The embodiment examples are meant to illustrate the invention, without confining it in any way whatsoever. For instance, brewery raw material prepared as taught by the invention can be used in beer-making by any process known in the art, the new brewery raw material being substituted for part of the malt.

## Claims

1. A procedure for preparing brewery raw material from barley comprising the steps of:
grinding barley in a dry state,
sifting a fine fraction from the ground barley that has particle size less than 300 µm and contains more than 65% by weight starch, and
separating said fraction for use as brewery raw material together with malt.

2. Procedure according to claim 1, characterized in that the particle size of the fine fraction is less than 250 µm.

3. Procedure according to claim 1 or 2, characterized in that the barley is ground in one step, the coarse fraction and bran being removed upon grinding and the fine fraction being recovered.

4. Procedure according to claim 1 or 2, characterized in that the barley is ground in two steps, the first step being a coarse grinding process, the coarse fraction and bran being removed after said first step and at least part of the finer product being ground in the second step, and that the fine fraction obtained from the second step mill is recovered.

5. Procedure according to claim 4, characterized in that in the second step, the finer product is ground in a hammer mill.

6. Procedure according to any one of claims 1-5, characterized in that the fine fraction constitutes 10 to 25% by weight, advantageously 10 to 20% by weight of the total barley quantity.

7. Procedure according to claim 6, characterized in that the fine fraction contains starch more than 75% by weight, advantageously more than 80% by weight.

8. Brewery raw material consisting of ground barley with particle size less than 300 µm said ground barley containing more than 65% by weight starch.

9. The use of brewery raw material prepared by a procedure according to any one of claims 1-7 together with malt in beer making.

10. Use of brewery raw material according to claim 9, characterized in that more than 10% by weight brewery raw material is used, calculated on the aggregate quantity of malt and brewery raw material.

11. Use of brewery raw material according to claim 10, characterized in that 10 to 40% by weight brewery raw material, calculated on the malt quantity, is used.

12. Use of brewery raw material according to claim 10, characterized in that 10 to 50% by weight brewery raw material, calculated on the malt quantity, is used.

13. Brewery raw material according to claim 8,
**characterized in that**
said particle size is less than 250µm.

14. Brewery raw material according to claim 8 or 13,
**characterized in that**
said ground barley contains starch more than 75% by weight, preferably more than 80% by weight.

## Patentansprüche

1. Verfahren zum Herstellen von Ausgangsstoff zum Brauen aus Gerste, das die folgenden Schritte umfaßt:
Mahlen von Gerste in trockenem Zustand,
Sieben einer feinen Fraktion der gemahlenen Gerste, deren Teilchengröße geringer ist als 300 µm und die mehr als 65 Gew.-% Stärke enthält, und
Abscheiden der Fraktion zur Verwendung als Aussgangsstoff zum Brauen zusammen mit Malz.

2. Verfahren nach Anspruch 1, **dadurch gekennzeichnet**, daß die Teilchengröße der feinen Fraktion geringer ist als 250 µm.

3. Verfahren nach Anspruch 1 oder 2, **dadurch gekennzeichnet**, daß die Gerste in einem Schritt gemahlen wird und nach dem Mahlen die grobe Fraktion sowie die Kleie entfernt werden und die feine Fraktion gewonnen wird.

4. Verfahren nach Anspruch 1 oder 2, **dadurch gekennzeichnet**, daß die Gerste in zwei Schritten gemahlen wird, wobei der erste Schritt ein Grobmahlverfahren ist, die grobe Fraktion und die Kleie nach dem ersten Schritt entfernt werden und wenigstens ein Teil des feineren Erzeugnisses in dem zweiten Schritt gemahlen wird und die in der Mühle des zweiten Schritts erzeugte feine Fraktion aufgefangen wird.

5. Verfahren nach Anspruch 4, **dadurch gekennzeichnet**, daß in dem zweiten Schritt das feinere Erzeugnis in einer Hammermühle gemahlen wird.

6. Verfahren nach einem der Ansprüche 1-5, **dadurch gekennzeichnet**, daß die feine Fraktion 10 bis 25 Gew.-%, vorteilhafterweise 10 bis 20 Gew.-%, der gesamten Gerstenmenge bildet.

7. Verfahren nach Anspruch 6, **dadurch gekennzeichnet**, daß die feine Fraktion einen Stärkeanteil von mehr als 75 Gew.-%, vorteilhafterweise mehr als 80 Gew.-%, enthält.

8. Ausgangsstoff zum Brauen, der aus gemahlener Gerste mit einer Teilchengröße von weniger als 300 µm besteht, wobei die gemahlene Gerste mehr als 65 Gew.-% Stärke enthält.

9. Einsatz von Ausgangsstoff zum Brauen, der mit einem Verfahren nach einem der Ansprüche 1-7 hergestellt wurde, zusammen mit Malz bei der Bierherstellung.

10. Einsatz von Ausgangsstoff zum Brauen nach Anspruch 9, **dadurch gekennzeichnet**, daß mehr als 10 Gew.-% Ausgangsstoff zum Brauen auf die Menge Malz und Ausgangsstoff zum Brauen zusammengerechnet, eingesetzt wird.

11. Einsatz von Ausgangsstoff zum Brauen nach Anspruch 10, **dadurch gekennzeichnet**, daß 10 bis 40 Gew.-% Ausgangsstoff zum Brauen auf die Malzmenge gerechnet, eingesetzt wird.

12. Einsatz von Ausgangsstoff zum Brauen nach Anspruch 10, **dadurch gekennzeichnet**, daß 10 bis 50 Gew.-% Ausgangsstoff zum Brauen auf die Malzmenge gerechnet, eingesetzt wird.

13. Einsatz von Ausgangsstoff zum Brauen nach Anspruch 8, **dadurch gekennzeichnet**, daß die Teilchengröße weniger als 250 µm beträgt.

14. Ausgangsstoff zum Brauen nach Anspruch 8 oder 13, **dadurch gekennzeichnet**, daß die gemahlene Gerste mehr als 75 Gew.-%, vorzugsweise mehr als 80 Gew.-% Stärke, enthält.

## Revendications

1. Procédé pour préparer un matériau brut de brasserie à partir d'orge comprenant les étapes consistant à :
- broyer l'orge dans un état sec,
- tamiser une fraction fine de l'orge broyée ayant une taille de particule inférieure à 300 µm et qui contient plus de 65% en poids d'amidon, et
- séparer ladite fraction pour une utilisation comme matériau brut de brasserie avec du malt.

2. Procédé selon la revendication 1, caractérisé en ce que la taille des particules de la fraction fine est inférieure à 250 µm.

3. Procédé selon la revendication 1 ou 2, caractérisé en ce que l'orge est broyée en une étape, la fraction grossière et le son étant retirés après broyage et la fraction fine étant récupérée.

4. Procédé selon la revendication 1 ou 2, caractérisé en ce que l'orge est broyée en deux étapes, la première étape étant un procédé de broyage grossier, la fraction grossière et le son étant retirés après ladite première étape et une partie au moins du produit plus fin étant broyé dans la deuxième étape, et en ce que la fraction fine obtenue après la deuxième étape de broyage est récupérée.

5. Procédé selon la revendication 4, caractérisé en ce que dans la seconde étape, le produit plus fin est broyé dans un broyeur à marteaux.

6. Procédé selon l'une quelconque des revendications 1 à 5, caractérisé en ce que la fraction fine constitue 10 à 25% en poids, avantageusement 10 à 20% en poids de la quantité totale d'orge.

7. Procédé selon la revendication 6, caractérisé en ce que la fraction fine contient de l'amidon à plus de 75% en poids, avantageusement à plus de 80% en poids.

8. Matériau brut de brasserie constitué d'orge broyée ayant une taille de particules inférieure à 300 µm ladite orge broyée contenant plus de 65% en poids d'amidon.

9. Utilisation de matériau brut de brasserie préparé par un procédé selon l'une quelconque des revendications 1 à 7 avec du malt dans la fabrication de bière.

10. Utilisation de matériau brut de brasserie selon la revendication 9, caractérisé en ce que plus de 10% en poids de matériau brut de brasserie est utilisé, calculé sur la quantité d'agrégat de malt et de matériau brut de brasserie.

11. Utilisation de matériau brut selon la revendication 10, caractérisé en ce que 10 à 40% en poids de matériau brut de brasserie, calculé sur la quantité de malt, est utilisé.

12. Utilisation de matériau brut selon la revendication 10, caractérisé en ce que 10 à 50% en poids de matériau brut de brasserie, calculé sur la quantité de malt, est utilisé.

13. Matériau brut de brasserie selon la revendication 8, caractérisé en ce que ladite taille de particules est inférieure à 250µm.

14. Matériau brut de brasserie selon la revendication 8 ou 13, caractérisé en ce que ladite orge broyée contient de l'amidon à plus de 75% en poids, de préférence à plus de 80% en poids.
